# EUROPÄISCHE PATENTSCHRIFT

(11) **EP 1 183 489 B1**
(45) Veröffentlichungstag und Bekanntmachung des Hinweises auf die Patenterteilung: **12.04.2006**
(21) Anmeldenummer: 00935020.8
(22) Anmeldetag: 15.05.2000
(51) Int. Cl.: F25D 23/06, B29C 44/12, E04C 2/284, E04C 2/296

(54) **WÄRMEISOLIERENDE WANDUNG**
HEAT-INSULATION WALL
PAROI CALORIFUGE

(30) Priorität: 21.05.1999 DE 19923382
(43) Veröffentlichungstag der Anmeldung: 06.03.2002
(73) Patentinhaber: BSH Bosch und Siemens Hausgeräte GmbH, 81739 München (DE)
(72) Erfinder: WENNING, Udo, D-89537 Giengen/Brenz (DE); STEGMAIER, Hermann, D-73580 Böbingen/Rems (DE)
(86) Internationale Anmeldenummer: PCT/EP2000/004353
(87) Internationale Veröffentlichungsnummer: WO 2000/071949

(56) Entgegenhaltungen:
- EP-A- 0 783 018
- DE-A- 4 319 188
- FR-A- 1 567 839
- GB-A- 2 204 530
- US-A- 3 940 524
- US-A- 4 438 166

## Beschreibung

Die Erfindung betrifft eine wärmeisolierende Wandung, wie ein Kältegerätgehäuse, eine Kältegerätetür oder dgl., mit einer Innenverkleidung, einer Außenverkleidung und einer zwischen diesen Verkleidungen vorgesehenen, durch Aufschäumen erzeugten Wärmeisolationsschicht.

Gehäuse und Türen für Kältegeräte, wie Kühl- und Gefriergeräte, werden üblicherweise durch eine zwischen einer Innen- und einer Außenverkleidung durch Aufschäumen erzeugten Wärmeisolationsschicht wärmeisoliert, wobei diese Wärmeisolationsschicht zugleich die ihr zugewandten Innenflächen der Innen- und Außenverkleidung benetzt und nach ihrem Aushärten zu einem formsteifen Gebilde verbindet. Während des Aufschäumvorgangs besteht wegen des frei werdenden Treibmittels die Gefahr, daß sowohl an der Innenverkleidung als auch an der Außenverkleidung wärmeisolationsmaterialleere Räume, sogenannte Lunker entstehen, in deren Bereich eine Abstützung der Innenverkleidung bzw. der Außenverkleidung durch das nach dem Aufschäumen ausgehärtete Wärmeisolationsmaterial fehlt. Diese Fehlstellen oder Lunker können zur Folge haben, daß sich die Innenverkleidung und/oder die Außenverkleidung im Bereich der Lunker aufgrund eines entstehenden Unterdruckes, hervorgerufen durch das Abkühlen des Wärmeisolationsmaterials nach der Inbetriebnahme des Kältegerätes oder durch das Herausdiffundieren des Treibmittels, nach innen verwölbt. Die Gefahr einer Verwölbung ist insbesondere dann besonders groß, wenn sich die Fehlstelle oder der Lunker an einem wenig eigensteifen Abschnitt der Innenverkleidung und/oder Außenverkleidung beispielsweise an der großflächigen Sichtfläche befindet, wobei eine Verwölbung optisch insbesondere an der oftmals hochglänzend ausgeführten Außenverkleidung besonders auffällig ist.

In der GB 2 204 530 A ist eine wärmeisolierende Wandung mit zwei Verkleidungsseiten, zwischen denen sich ein wärmeisolierender Schaum befindet, offenbart. Unmittelbar an den Innenseiten der Verkleidungsseiten sind Platten mit einer dreidimensionalen Gitter- oder Netzstruktur befestigt.

Aus der FR 1,567,839 ist eine wärmeisolierende Wandung mit zwei Verkleidungsseiten bekannt. Innerhalb der beiden Vericleidungsseiten ist ein wärmeisolierender Schaum eingespritzt. Die Innenflächen der Verkleidungsseiten sind mit einer Gitterstruktur versehen, mit der sich der Schaum verbindet.

Der Erfindung liegt die Aufgabe zugrunde, bei einer wärmeisolierenden Wandung gemäß dem Oberbegriff des Anspruches 1 oder des Anspruchs 2 mit einfachen konstruktiven Maßnahmen die Nachteile des Standes der Technik zu vermeiden.

Die Aufgabe wird gemäß der Erfindung nach Anspruch 1 dadurch gelöst, daß die Mittel aus offenzeiligem Schaumstoff gebildet sind. Durch die erfindungsgemäße Maßnahme wird an den mit dem Mittel versehenen Bereichen der Innenverkleidung und/oder der Außenverkleidung die durch das Treibmittel hervorgerufene Ausbreitung des Schaumes zu den dem aufschäumenden Wärmeisolationsmaterial zugewandten Innenflächen der Innenverkleidung und/oder der Außenverkleidung hin zeitlich verzögert. Durch die Zeitverzögerung wird einer sich während des Aufschäum- oder Aufblähvorganges des Wärmeisolationsmaterials gegebenenfalls auftretenden Luftblase die Zeit verschafft wird, sich entweder sehr kleinvolumig in Kleinstgasblasen über die Fläche des Mittels zu verteilen oder über die Mittel selbsttätig abzuführen, so daß aufgrund der durch die Mittel bewirkten zeitlich verzögerten Benetzung der Innenverkleidung und/oder Außenverkleidung mit dem aufschäumenden Wärmeisolationsmaterial eine Luftblasenbildung an den Verkleidungen verhindert ist. Auf diese Weise ist eine zu einer Verwölbung der Innenverkleidung und/oder der Außenverkleidung führende Lunkerbildung innerhalb des erstarrten Wärmeisolationsmaterials vermieden. Die zeitliche Verzögerung durch die Mittel wird durch eine Erhöhung des Strömungswiderstandes für das aufschäumende Wärmeisolationsmaterial erreicht, welches z.B. dann innerhalb der Mittel erstarrt. Vorteilhafterweise sind die Mittel aus offenzelligem Schaumstoff plattenartige, offenzellige Polyurethanschäume oder offenzellige Polyethylenschäume. Durch den Einsatz von offenzelligen, plattenartigen Schaumstoffen wird bedingt durch deren offene Zellen entweder eine besonders rasche Abführung oder eine besonders großflächige der beim Aufschäumen des Wärmeisolationsmaterials gegebenenfalls entstehenden Gasblase bewirkt, wobei diese im Falle ihrer großflächigen Verteilung in viele einzelne kleinvolumige und somit hinsichtlich einer Lunkerbildung vollkommen unschädliche Kleingasblasen zerteilt ist.

Die Aufgabe wird gemäß der Erfindung nach Anspruch 2 dadurch gelöst, daß die Mittel aus einem eine gitterartige Struktur aufweisenden, mit ihrer Gittersturktur von der Innenverkleidung und/oder der Außenverkleidung beabstandeten Element gebildet sind. Durch die Verwendung eines Gitters oder Lochsiebs lassen sich deren Öffnungen und damit verbunden deren dem aufschäumenden Wärmeisolationsmaterial entgegenwirkenden Stömungswiderstand besonders genau definieren und anpassen. Ferner lassen sich die beispielsweise aus Kunststoffspritzguß erzeugten Lochsiebe und Gitter in einer zumindest weitgehend an die räumliche Gestalt der Innenverkleidung und/oder der Außenverkleidung kostengünstig, z.B. durch eine einstückige Ausführung oder deren günstige Verformbarkeit, anpassen. Durch eine derartige Anpassung läßt sich wiederum eine äußerst rasche Montage dieser Lochsiebe und Gitter bezüglich der Innenverkleidung und der Außenverkleidung erreichen, wobei unter Anwendung von an das Gitter oder das Lochsieb mitangeformten Abstandshaltern gleichzeitig ein definierter Abstand zur schaumseitigen Innenfläche der Innenverkleidung und/oder der Außenverkleidung erreicht ist. Darüber hinaus zeichnen sich Lochsiebe und Gitter durch ihre besondere Flexibilität und der damit verbundenen Montagefreundlichkeit aus.

Nach einer bevorzugten Ausführungsform des Gegenstandes der Erfindung ist vorgesehen, daß das aufschäumende Wärmeisolationsmaterial die Mittel zumindest teilweise durchdrungen und die Innenverkleidung und/oder die Außenverkleidung benetzt hat. Hierdurch ist eine Lunkerbildung durch Abführen oder Verteilen der Gasblasen vermieden und gleichzeitig dabei die dem Kältegerätegehäuse oder der Kältegerätetür die Form- und Verwindungssteifigkeit verleihende Benetzung des Wärmeisolationsmaterials mit der Innen- und der Außenverkleidung sichergestellt. Durch das Durchdringen der Mittel mit Wärmeisolationsmaterial bleibt demzufolge trotz der Anwendung findenden Mittel zur Vermeidung der Lunker die Verbindungswirkung des aufschäumenden und im Anschluß daran aushärtenden Wärmeisolationsmaterials zwischen der Innen- und der Außenverkleidung zu einem formsteifen Verbund erhalten.

Besonders sicher vermieden sind die zur Einfallstellen an der Innenverkleidung und/oder der Außenverkleidung führenden Lunker innerhalb des Wärmeisolationsmaterials, wenn nach einer nächsten vorteilhaften Ausführungsform des Gegenstandes der Erfindung vorgesehen ist, daß die Mittel zumindest weitgehend vollflächig an der Innenverkleidung und/oder der Außenverkleidung vorgesehen sind. Darüber hinaus läßt sich eine vollflächige Belegung der Innenverkleidung und/oder der Außenverkleidung mit den die Lunker innerhalb des Wärmeisolationsmaterials vermeidenden Mitteln in einer Großserienfertigung besonders leicht und kostengünstig umsetzen, da eine zeitraubende, zielgerichtete Anbringung entfällt.

Gemäß einer weiteren bevorzugten Ausführungsform des Gegenstandes der Erfindung ist vorgesehen, daß die Mittel aus offenzelligen Schaumstoff eine Schichtdicke zwischen 2mm und 7mm aufweisen aber vorzugsweise eine Schichtdicke von 3mm besitzen. Die Verwendung von plattenartigen, offenzelligen Schaumstoff, plattenförmigen Vliesmaterial mit einer derartigen Schichtdicke ist besonders vorteilhaft.

Auf besonders einfache Weise positionssicher an der Innenverkleidung und/oder der Außenverkleidung gehalten sind die Mittel, wenn nach einer letzten bevorzugten Ausführungsform des Gegenstandes der Erfindung vorgesehen ist, daß die Mittel zumindest abschnittsweise an der Innenverkleidung und/oder der Außenverkleidung festgesetzt sind.

Die Erfindung ist in der nachfolgenden Beschreibung anhand eines in der beigefügten Zeichnung vereinfacht dargestellten Ausführungsbeispieles erläutert. Es zeigen:
- Figur 1: in vereinfachter, schematischer Darstellung einen Haushaltskühlschrank mit einem wärmeisolierenden Gehäuse und einer daran angeschlagenen, im Schließzustand befindlichen Tür, in raumbildlicher Ansicht von vorne,
- Figur 2: den Haushaltskühlschrank mit an den Seitenwänden seines wärmeisolierenden Gehäuses und an seiner Tür vorgesehenen erfindungsgemäßen Mitteln in Form von offenzelligen Polyurethanschaumplatten, im Horizontalschnitt, und
- Figur 3: ausschnittsweise etwa in natürlichem Maßstab den oberen Abschnitt der Tür mit an der Innenseite ihrer Außenverkleidung angeordneter offenzelliger Polyurethanschaumplatte.

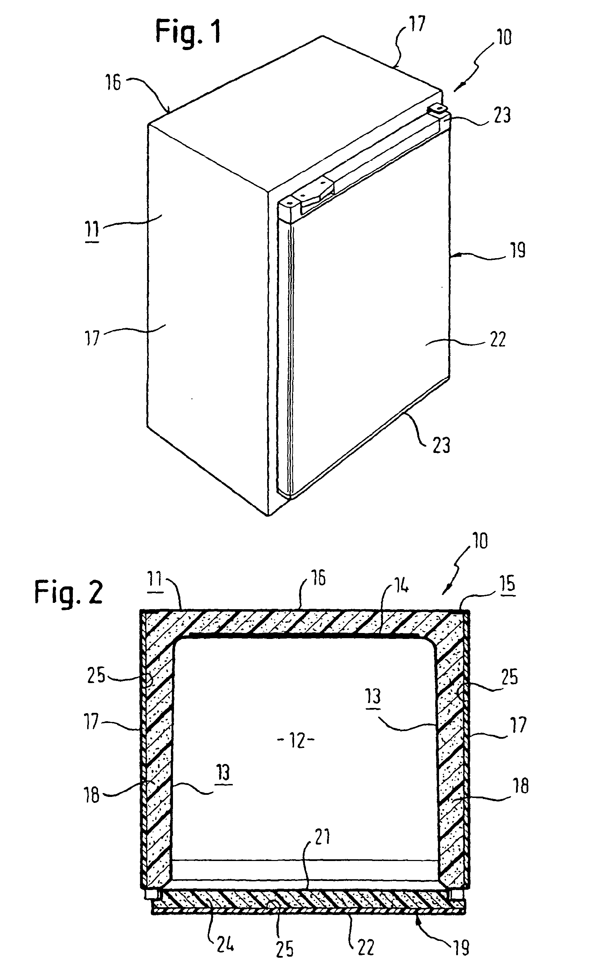

Gemäß Figur 1 ist ein Haushaltskühlschrank 10 mit einem wärmeisolierenden Gehäuse 11 dargestellt, innerhalb welchem ein mit nicht näher dargestellten Kühlgutablagen ausgestatteter Kühlraum 12 vorgesehen ist. Dieser ist von einer durch spanlose Formgebung einer Kunststoffplatine erzeugten Innenverkleidung 13 ausgekleidet, deren Rückwand an ihrer vom Kühlraum 12 abgekehrten Außenseite eine zur Kühlung des Kühlraumes 12 dienende Verdampferplatine 14 aufweist. Im Abstand zur Innenverkleidung 13 weist das wärmeisolierende Gehäuse 12 eine Außenverkleidung 15 auf, welche im vorliegenden Fall aus einer nicht näher bezeichneten Boden- und Deckenwandung einer z.B. aus Pappe gebildeten Rückwand 16 und je einer Seitenwand 17, welche im vorliegenden Fall z.B. durch spanlose Formgebung einer sichtseitig zumindest mit einem Lacküberzug versehenen Stahlblechplatine erzeugt ist, welche einerseits mit der Rückwand 16 und andererseits mit den freien Enden der Innenverkleidung 13 mechanisch verbunden ist. Zwischen der Außenverkleidung 15 und der dazu beabstandeten Innenverkleidung 13 ist eine zur Wärmedämmung des Gehäuses 11 dienende, durch Aufschäumen erzeugte Wärmeisolationsschicht 18 eingebracht, durch deren benetzende und adhäsive Eigenschaften die Innenverkleidung 13 und die Außenverkleidung 15 zu einem zumindest weitgehend form- und verbindungssteifen Gehäuseaufbau verbunden sind.

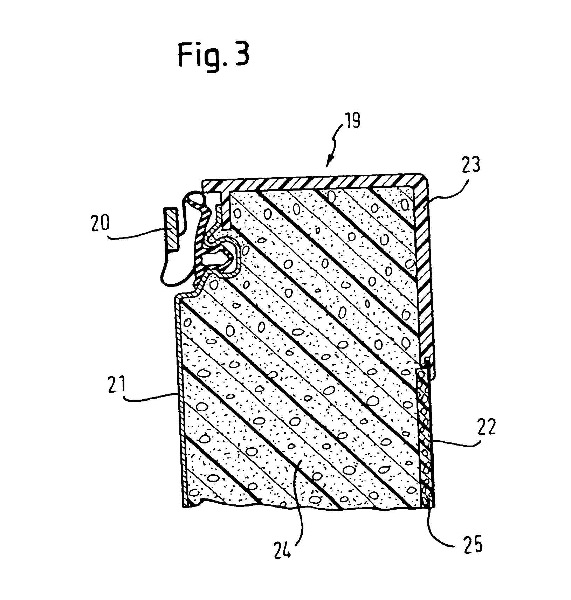

Das wärmeisolierende Gehäuse 10 besitzt zum Verschließen seinen Kühlraumes 12 eine um eine senkrechte Achse drehbar am Randbereich der Zugangsöffnung zum Kühlraum 12 gelagerte Tür 19, welche im Schließzustand elastisch über eine Magnetdichtung 20 am Öffnungsrand des Kühlraumes 12 anliegt. Die Magnetdichtung 20 ist umlaufend an den freien Rändern einer dem Kühlraum 12 zugewandten, durch spanlose Formgebung einer Kunststoffplatine gebildeten Innenverkleidung 21 gehaltert. Im Abstand zur Innenverkleidung 21 besitzt die Tür 19 eine an ihren außenliegenden Sichtflächen mit einem Lacküberzug versehene Außenverkleidung 22, welche im vorliegenden Fall durch spanlose Formgebung einer Stahlblechplatine erzeugt ist und welche im Querschnitt im wesentlichen U-förmig ausgebildet ist, wobei die Schenkel des U-Profils die in Einbaulage der Tür 19 vertikal angeordneten Türseitenwangen bilden. Die Tür 19 ist an ihren horizontal verlaufenden Stirnseiten mit je einer beispielsweise aus Kunststoffspritzguß gefertigten Stimleisten 23 ausgestattet (siehe hierzu Figur 1 und Figur 3), mit Hilfe welcher die freien, stirnseitigen Ränder der Innenverkleidung 21 und der Außenverkleidung 22 gehaltert sind. Die Stimleisten 23 umschließen zusammen mit der Innenverkleidung 21 und der Außenverkleidung 22 einen Hohlraum. Dieser ist zum Zwecke der Wärmedämmung der Tür 19 mit einer durch Aufschäumen erzeugten Wärmeisolationsschicht 24 verfüllt, durch deren benetzende und adhäsive Wirkung die Stirnleisten 23 sowie die Innenverkleidung 21 als auch die Außenverkleidung 22 zu einem zumindest weitgehend form- und verbindungssteifen Gebilde verbunden sind.

Wie insbesondere aus Figur 2 hervorgeht, ist sowohl die der Wärmeisolationsschicht 24 zugewandte Innenseite der Türaußenverkleidung 22 als auch die der Wärmeisolationsschicht 18 zugewandten Innenseiten der Seitenwände 17 mit im vorliegenden Fall beispielsweise aus 3mm starken, offenzelligen Polyurethanschaumplatten gebildeten Mitteln 25 versehen, welche das aufschäumende, den Innenflächen der Seitenwände 17 bzw. der Außenverkleidung 22 zuströmende Wärmeisolationsmaterial 18 bzw. 24 in seiner Strömungsgeschwindigkeit entgegenwirken, wodurch eine zeitliche Verzögerung der Benetzung des aufschäumenden Wärmeisolationsmaterials 18 bzw. 24 an den Innenflächen der Seitenwänden 17 bzw. der Außenverkleidung 22 erreicht ist. Durch die, durch die Mittel 25 hervorgerufene zeitliche Verzögerung der Benetzung der Seitenwände 17 bzw. der Außenverkleidung 22 ist eine Bildung von Lunkern, verursacht durch beim Aufschäumen des Wärmeisolationsmaterials 18 bzw. 24 infolge des Treibmittels sich ergebenden Gasblasen verhindert, da eine eventuell entstehende Gasblase durch die offenzellige Struktur der Mittel 25 entweder über die Fläche der Mittel 25 zu Kleinstgasblasen verteilt oder von der Verbindungsstelle zwischen dem aufschäumenden Wärmeisolationsmaterial 18 bzw. 24 und den Innenseiten der Seitenwände 17 bzw. der Außenverkleidung 22 abgeführt ist. Durch die Vermeidung von Gasblasen und der damit verbundenen Lunkerbildung sind zur Wärmeisolationsschicht 18 bzw. 24 gerichtete, als Einfallstellen bezeichnete Verwölbungen der Außenverkleidung 22 bzw. der Seitenwände 17 verhindert. Die Mittel 25 können entweder nur an den lunkerträchtigen und somit zu Einfallstellen neigenden Abschnitten des Gehäuses 11 und der Tür 19, nämlich z.B. an den überwiegend großflächigen Abschnitten der Innenverkleidung 13 und/oder der Seitenwände 17, der Innenverkleidung 21 und/oder der Außenverkleidung 22 angeordnet sein. Möglich ist aber auch, daß die Mittel 25 vollflächig an der Innenverkleidung 13, den Seitenwänden 17, der Innenverkleidung 21 und der Außenverkleidung 22 vorgesehen sind. Die Mittel 25 können beispielsweise durch abschnittsweises Ankleben an den Innenseiten der Innenverkleidung 13, den Seitenwänden 17, der Innenverkleidung 21 und der Außenverkleidung 22 festgesetzt sein.

## Patentansprüche

1. Wärmeisolierende Wandung, wie ein Kältegerätegehäuse (12) oder eine Kältegerätetür (19), mit einer Innenverkleidung (13, 21), einer Außenverkleidung (15, 22) und einer zwischen diesen Verkleidungen vorgesehenen, durch Aufschäumen erzeugten Wärmeisolationsschicht (18, 24), die zumindest weit gehend in Mittel (25) eingedrungen und darin erstarrt ist, welche teilweise an der Innenverkleidung (13, 21) und/oder der Außenverkleidung (15, 22), auf der der Wärmeisolationsschicht (18, 24) zugewandten Seite vorgesehen sind, **dadurch gekennzeichnet, dass** die Mittel (25) aus offenzelligem Schaumstoff gebildet sind.

2. Wärmeisolierende Wandung, wie ein Kältegerätegehäuse (12) oder eine Kältegerätetür (19), mit einer Innenverkleidung (13, 21), einer Außenverkleidung (15, 22) und einer zwischen diesen Verkleidungen vorgesehenen, durch Aufschäumen erzeugten Wärmeisolationsschicht (18, 24), die zumindest weit gehend in Mittel (25) eingedrungen und darin erstarrt ist, weiche teilweise an der Innenverkleidung (13, 21) und/oder der Außenverkleidung (15, 22), auf der der Wärmeisolationsschicht (18, 24) zugewandten Seite vorgesehen sind, wobei die Mittel eine gitterartige Struktur aufweisen, **dadurch gekennzeichnet, dass** die die gitterartige Struktur aufweisenden Mittel (25) durch ein Element von der Innenverkleidung (13, 21) und/oder der Außenverkleidung (15, 22) beabstandet sind.

3. Wärmeisolierende Wandung nach Anspruch 1 oder 2, **dadurch gekennzeichnet, dass** die aufschäumende Wärmeisolationsschicht (18, 24) die Mittel (25) zumindest teilweise durchdrungen und die Innenverkleidung (13, 21) und/oder die Außenverkleidung (15, 22) benetzt hat.

4. Wärmeisolierende Wandung nach Anspnrch 1, **dadurch gekennzeichnet, dass** die Mittel (25) eine Schichtstärke zwischen 2 mm und 7 mm aufweisen, aber vorzugsweise eine Schichtstärke von 3 mm besitzen.

5. Wärmeisolierende Wandung nach einem der Ansprüche 1 bis 4, **dadurch gekennzeichnet, dass** die Mittel (25) zumindest abschnittsweise an der Innenverkleidung (13, 24) und/oder der Außenverkleidung (15, 22) festgesetzt sind.

## Claims

1. Thermally insulating wall, such as a refrigerating appliance housing (12) or a refrigerating appliance door (19), with an inner lining (13, 21), an outer lining (15, 22) and a thermal insulation layer (18, 24) which is provided between these linings and produced by foaming and which has at least substantially penetrated into means (25) and hardened therein, the means being partly provided at the inner lining (13, 21) and/or the outer lining (15, 22), on the side facing the thermal insulation layer (18, 24), **characterised in that** the means (24) are formed from open-cell foam material.

2. Thermally insulating wall, such as a refrigerating appliance housing (12) or a refrigerating appliance door (19), with an inner lining (13, 21), an outer lining (15, 22) and a thermal insulation layer (18, 24) which is provided between these linings and produced by foaming and which has at least substantially penetrated into means (25) and hardened therein, the means being partly provided at the inner lining (13, 21) and/or the outer lining (15, 22), on the side facing the thermal insulation layer (18, 24), wherein the means have a grid-like structure, **characterised in that** the means (25) having the grid-like structure are spaced from the inner lining (13, 21) and/or the outer lining (15, 22) by an element.

3. Thermally insulating wall according to claim 1 or 2, **characterised in that** the thermal insulation layer (18, 24) foaming up has at least partly penetrated the means (25) and wetted the inner lining (13, 21) and/or the outer lining (15, 22).

4. Thermally insulating wall according to claim 1, **characterised in that** the means (25) have a layer thickness between 2 mm and 7 mm, but preferably a layer thickness of 3 mm.

5. Thermally insulating wall according to one of claims 1 to 4, **characterised in that** the means (25) are fixed at least in sections to the inner lining (13, 24) and/or the outer lining (15, 22).

## Revendications

1. Paroi calorifuge, telle qu'un corps d'appareil frigorifique (12) ou une porte d'appareil frigorifique (19), avec un revêtement intérieur (13, 21), un revêtement extérieur (15, 22) et une couche calorifuge (18, 24) prévue entre ces revêtements, produite par moussage, qui est introduite au moins en grande partie dans des moyens (25) et y est solidifiée, lesquels, en partie sur le revêtement intérieur (13, 21) et/ou le revêtement extérieur (15, 22), sont prévus sur le côté orienté vers la couche calorifuge (18, 24), **caractérisée en ce que** les moyens (25) sont formés à partir de mousse à alvéoles ouvertes.

2. Paroi calorifuge, telle qu'un corps d'appareil frigorifique (12) ou une porte d'appareil frigorifique (19), avec un revêtement intérieur (13, 21), un revêtement extérieur (15, 22) et une couche calorifuge (18, 24) prévue entre ces revêtements, produite par moussage, qui est introduite au moins en grande partie dans des moyens (25) et y est solidifiée, lesquels, en partie sur le revêtement intérieur (13, 21) et/ou le revêtement extérieur (15, 22), sont prévus sur le côté orienté vers la couche calorifuge (18, 24), les moyens présentant une structure en forme de grille, **caractérisée en ce que** les moyens (25) présentant la structure en forme de grille sont maintenus, au moyen d'un élément, à une certaine distance du revêtement intérieur (13, 21) et/ou du revêtement extérieur (15, 22) .

3. Paroi calorifuge selon la revendication 1 ou 2, **caractérisée en ce que** la couche calorifuge moussante (18, 24) a pénétré au moins partiellement les moyens (25) et a imprégné le revêtement intérieur (13, 21) et/ou le revêtement extérieur (15, 22).

4. Paroi calorifuge selon la revendication 1, **caractérisée en ce que** les moyens (25) présentent une épaisseur de couche entre 2 mm et 7 mm mais possèdent de préférence une épaisseur de couche de 3 mm.

5. Paroi calorifuge selon l'une des revendications 1 à 4, **caractérisée en ce que** les moyens (25) sont fixés au moins par segments au revêtement intérieur (13, 24) et/ou au revêtement extérieur (15,22).
